# EUROPEAN PATENT SPECIFICATION

(11) **EP 2 769 879 B1**
(45) Date of publication and mention of the grant of the patent: **10.07.2019**
(21) Application number: 13195302.8
(22) Date of filing: 02.12.2013
(51) Int. Cl.: B60Q 1/14, F21S 41/164

(54) **Lighting apparatus**
Beleuchtungsvorrichtung
Appareil d'éclairage

(30) Priority: 21.02.2013 JP 2013031670
(43) Date of publication of application: 27.08.2014
(73) Proprietor: Honda Motor Co., Ltd., Tokyo 107-8556 (JP)
(72) Inventor: Kizaki, Tokujiro, Saitama, 351-0193 (JP)
(74) Representative: Weickmann & Weickmann PartmbB

(56) References cited:
- EP-A2- 1 434 001
- JP-A- 2009 259 689
- US-A- 5 307 247
- US-A- 5 430 623
- US-A1- 2002 001 200
- US-A1- 2012 113 665
- US-B1- 6 422 726
- US-B2- 7 407 310

## Description

### Technical Field

The present invention relates to a lighting apparatus having a main light emission part and a sub light emission part.

### Background Art

Of motorcycle and the like, some have a configuration in which the light from a light source for a main light emission part is divided to realize a characteristic lighting apparatus. In connection with this type of lighting apparatus, there has been disclosed a structure as follows (see, for example, Japanese Patent Laid-open No. JP 2009-259689). In the structure, the lighting apparatus includes a main reflector for reflecting forward the light of a light source for a main light emission part, a guide reflector continuous with an upper front end of the main reflector, and a side reflector continuous with a lower front end of the main reflector. A portion of the light from a bulb provided as the light source for the main light emission part is reflected toward a lower side by the guide reflector, and the thus reflected light is reflected toward the front side by the side reflector.

A lighting apparatus according to the preamble of claim 1 is known from US 7 407 310 B2 and US 5 430 623 A also discloses a light source of a double filament type having a low-beam filament and a high-beam filament.

### Summary of the Invention

### Problem to Be Solved by the Invention

Meanwhile, of the component parts which are disposed rearwardly of a light source and designed to surround the light source, such as a main reflector, many are demolded (upon molding thereof) in the optical axis direction of the main light emission part (the direction corresponds to the front-rear direction of the vehicle body). For example, a housing of a lighting apparatus and a socket for a bulb are component parts which are often demolded in the optical axis direction of the main light emission part.

In the case where the guide reflector described in Japanese Patent Laid-open No. JP 2009-259689 is provided as a part of such a component part as just-mentioned, there arises a problem as follows. The guide reflector in Japanese Patent Laid-open No. JP 2009-259689 hangs down so that the reflection surface thereof faces rearward at a position on the front side of the main reflector. Therefore, it is difficult for the guide reflector to be demolded in the optical axis direction of the main light emission part.

The present invention has been made in consideration of the above-mentioned circumstances. Accordingly, it is an object of the present invention to provide a lighting apparatus wherein a sub reflector for reflecting a portion of the light from a light source for a main light emission part in a direction different from the direction of the light emitted from the main light emission part can be easily provided as a part of a component part that is demolded in the optical axis direction of the main light emission part.

### Means for Solving the Problem

In order to solve the above-mentioned problem, according to the present invention, there is provided a lighting apparatus including: a main light emission part (41) including a light source (23), and a main reflector (27) disposed rearwardly of the light source (23), the main reflector (27) reflecting light of the light source (23) forward; and a sub light emission part (42) including a first sub reflector (28) for reflecting a portion of the light from the light source (23) in a direction different from the direction of the light emitted from the main light emission part (41), and a second sub reflector (29) for reflecting the light from the first sub reflector (28) toward a front side, characterized in that the first sub reflector (28) is disposed rearwardly of the light source (23) in an area to which the light emitted rearward from the light source (23) is incident, and the first sub reflector (28) is formed as a part of a molded product which is one of component parts of the lighting apparatus, the molded product demolded in the direction of an optical axis of the main light emission part (41) in the state of layout under consideration.

According to this configuration, the first sub reflector in the sub light emission part is disposed rearwardly of the light source in an area to which the light emitted rearward from the light source is incident. In addition, the first sub reflector is formed as a part of a molded product which is one of component parts of the lighting apparatus and which is demolded in the optical axis direction of the main light emission part in the state of layout under consideration. Therefore, the first sub reflector can be easily provided as a part of a component part which is molded to be demolded in the optical axis direction of the main light emission part.

Further, according to the present invention, the light source (23) is of a double filament type having a low-beam filament (23A) and a high-beam filament (23B), and the main reflector (27) has a low-beam reflector part (27A) above the low-beam filament (23A), the low-beam reflector part (27A) reflecting light emitted upward from the low-beam filament (23A) toward a front side, the first sub reflector (28) is disposed above the low-beam filament (23A), and the second sub reflector (29) is disposed below the low-beam filament (23A) at a position spaced from the low-beam filament (23A) in front view.

According to this configuration, when the low-beam filament is turned on, the first and second sub reflectors allow an area spaced from the low-beam filament to emit light. As a result, a characteristic external appearance can be realized, and external visibility is also enhanced.

In the above-mentioned configuration of the lighting apparatus, a configuration may be adopted wherein the first sub reflector (28) is located with an offset at least in one of leftward and rightward directions from the center of the low-beam filament (23A) in front view. According to this configuration, the first sub reflector can be arranged while avoiding the low-beam filament, and it becomes easy to secure the quantity of light emitted by the sub light emission part.

Besides, in the above-mentioned configuration of the lighting apparatus, a configuration may be adopted wherein a pair of the first sub reflectors (28) are disposed distributedly on left and right sides with reference to the low-beam filament (23A) so that optical axes (L1, L2) of beams of light reflected by the first sub reflectors (28) intersect each other in front view, and the second sub reflector (29) is formed in a downwardly convexed shape along an lower edge of the main light emission part (41) in front view, on extension lines of the optical axes (L1, L2). According to this configuration, the portion in the convexed shape along the lower edge of the main light emission part 41 can be made to emit a large quantity of light.

Further, in the above-mentioned configuration of the lighting apparatus, a configuration may be adopted wherein an opening (27K) for allowing light reflected by the first sub reflector (28) to pass therethrough to the rear side is provided on a lower side of the first sub reflector (28), and the second sub reflector (29) is disposed in an area to which the light having passed through the opening (27K) is incident and which is outside of the main reflector (27). According to this configuration, the sub light emission part can be provided through effective utilization of a space outside of the main reflector.

In addition, in the above-mentioned configuration of the lighting apparatus, a configuration may be adopted wherein the opening (27K) has at least a part thereof opening below the light source (23). According to this configuration, the opening can be provided through utilization of an area which is not utilized for emission of a low beam. Consequently, the area of emission of the low beam is not obstructed, so that it becomes easy to secure the light emission area.

Besides, in the above-mentioned configuration of the lighting apparatus, a configuration may be adopted wherein the first sub reflector (28) and the second sub reflector (29) are provided to be integral with the main reflector (27), and the main reflector (27) is configured as a movable reflector which can be moved so that an optical axis thereof can be adjusted. According to this configuration, while adopting the configuration of a movable reflector, it is possible to perform an optical axis adjustment for a sub light emission part in conjunction with an optical axis adjustment for the main light emission part.

Further, in the above-mentioned configuration of the lighting apparatus, a configuration may be adopted wherein the first sub reflector (28) and the second sub reflector (29) are provided as parts of a component part or parts of the lighting apparatus exclusive of the main reflector, and are configured to be of an adjustment type in which optical axes thereof are adjusted by moving the lighting apparatus as a whole. According to this configuration, while adopting the configuration of the adjustment type in which an optical axis adjustment is carried out by moving the lighting apparatus as a whole, it is possible to easily provide the first sub reflector and the second sub reflector, and to perform an optical axis adjustment for the sub light emission part in conjunction with an optical axis adjustment for the main light emission part.

### Effects of the Invention

According to the present invention, the first sub reflector in the sub light emission part is disposed rearwardly of the light source in an area to which the light emitted rearward from the light source is incident, and the first sub reflector is formed as a part of a molded product which is one of the component parts of the lighting apparatus and which is molded to be demolded in the optical axis direction of the main light emission part in the state of layout under consideration. This enables the first sub reflector to be easily provided as a part of a component part which is demolded in the optical axis direction of the main light emission part.

In addition, according to the present invention, the main reflector is provided, above the low-beam filament, with the low-beam reflector part for reflecting toward the front side the light emitted upward from the low-beam filament, the first sub reflector is disposed above the low-beam filament, and the second sub reflector is disposed below the low-beam filament at a position which is spaced from the low-beam filament in front view. This configuration ensures that when the low-beam filament is turned on, the first and second sub reflectors permit an area spaced from the low-beam filament to emit light. Consequently, a characteristic external appearance can be attained, and external visibility is also enhanced.

Besides, where the first sub reflector is disposed with an offset in at least one of leftward and rightward directions from the center of the low-beam filament in front view, the first sub reflector can be disposed while avoiding the low-beam filament, and it becomes easy to secure the quantity of light emitted from the sub light emission part.

Further, a configuration may be adopted wherein a pair of the first sub reflectors are distributedly arranged on the left and right sides with reference to the low-beam filament, in such a manner that the optical axes of the beams of light reflected by the first sub reflectors intersect each other in front view, and the second sub reflector is formed in a downwardly convexed shape along the lower edge of the main light emission part in front view, on extension lines of the optical axes. This configuration ensures that the portion in the convexed shape along the lower edge of the main light emission part can be made to emit a sufficient quantity of light.

In addition, a configuration may be adopted wherein the opening allowing the light reflected by the first sub reflector (28) to pass therethrough to the rear side of the main reflector is provided on the lower side of the first sub reflector, and the second sub reflector is arranged in an area to which the light having passed through the opening is incident and which is outside of the main reflector. This configuration makes it possible to provide the sub
light emission part through effective utilization of a space outside of the main reflector.

Besides, where the opening has at least a part thereof opening below the light source, the opening can be provided through utilization of an area which is not utilized for emission of a low beam. In addition, the area of emission of the low beam is not obstructed, and it becomes easy to secure the light emission area.

Further, where the first sub reflector and the second sub reflector are provided to be integral with the main reflector and the main reflector is configured as a movable reflector which can be moved to perform an optical axis adjustment, it is possible, while adopting the movable reflector configuration, to perform an optical axis adjustment for a sub light emission part in conjunction with an optical axis adjustment for the main light emission part.

In addition, a configuration may be adopted in which the first sub reflector and the second sub reflector are provided as parts a component part or parts of the lighting apparatus exclusive of the main reflector, and an optical axis adjustment is conducted by moving the lighting apparatus as a whole. This configuration ensures that, while adopting the configuration in which an optical axis adjustment is carried out by moving the lighting apparatus as a whole, it is possible to easily provide the first sub reflector and the second sub reflector, and to perform an optical axis adjustment for the sub light emission part in conjunction with an optical axis adjustment for the main light emission part.

### Brief Description of the Drawings

FIG. 1 is a view, as viewed from a front side, of a motorcycle having mounted thereon a headlamp according to a first embodiment of the present invention.
FIG. 2 is a view of the headlamp after removal of a part of a front lens therefrom, as viewed from the front side together with the surrounding configuration.
FIG. 3 is a sectional view taken along line III-III of FIG. 2.
FIG. 4 is a sectional view taken along line IV-IV of FIG. 2.
FIG. 5 is a view of a headlamp according to a second embodiment, as viewed from the front side together with the surrounding configuration.
FIG. 6 is a sectional view taken along line VI-VI of FIG. 5.
FIG. 7 is a view of a headlamp according to a third embodiment, as viewed from a lateral side together with the surrounding configuration.
FIG. 8 is a view of a headlamp according to a fourth embodiment, as viewed from the front side together with the surrounding configuration.
FIG. 9 is a view of a bulb, as viewed from the lateral side together with the surrounding configuration.

### Best Mode for Carrying Out the Invention

Now, an embodiment of the present invention will be described below, referring to the drawings. Incidentally, in the following description, such directions as front, rear, left, right, up, and down are the same as those directions with reference to a vehicle body, unless specified otherwise. In addition, in the drawings, symbol FR denotes the front side of the vehicle body, symbol UP denotes the upper side of the vehicle body, and symbol L denotes the left side of the vehicle body.

### First Embodiment

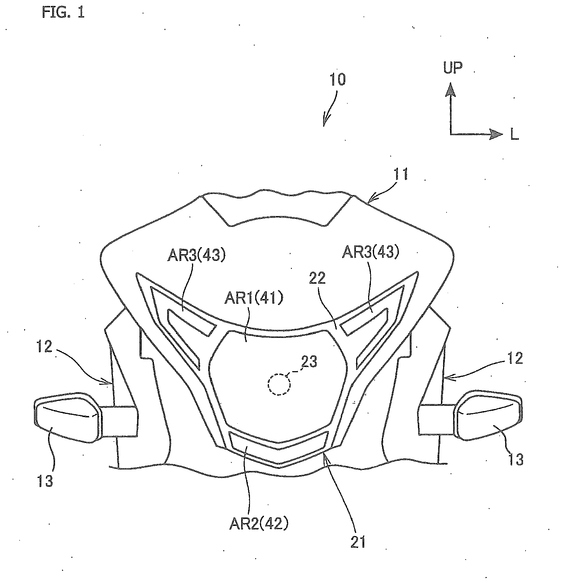

FIG. 1 is a view, as viewed from the front side, of a motorcycle having mounted thereon a headlamp according to a first embodiment of the present invention.

The motorcycle 10 includes a front cowl 11 covering the front side of a vehicle body, and a pair of left and right front side cowls 12 provided on the left and right sides of the front cowl 11 to cover the left and right sides of a front portion of the vehicle body. A single headlamp 21 for illuminating the forward side of the vehicle body is provided in a vehicle-width-directionally central position of the front cowl 11, and the left and right front side cowls 12 are provided with winker units 13, respectively.

The headlamp 21 includes: a front lens 22 covering the front side of the headlamp 21; and a lamp housing 25 located rearwardly of the front lens 22 and supporting a single bulb 23 (which serves as a light source) between itself and the front lens 22.

In the present embodiment, the headlamp 21 is formed in the shape of an inverted triangle such that its width is greater on the upper side and smaller on the lower side in front view. In this headlamp 21, a central area (first area) AR1 surrounded by upper left and right corner portions and a lower corner portion is assigned for main light emission, a lower-side area (second area) AR2 as the lower corner portion is assigned for lower-side sub light emission, and side areas (third areas) AR3 as upper left and right corner portions are assigned for side sub light emission.

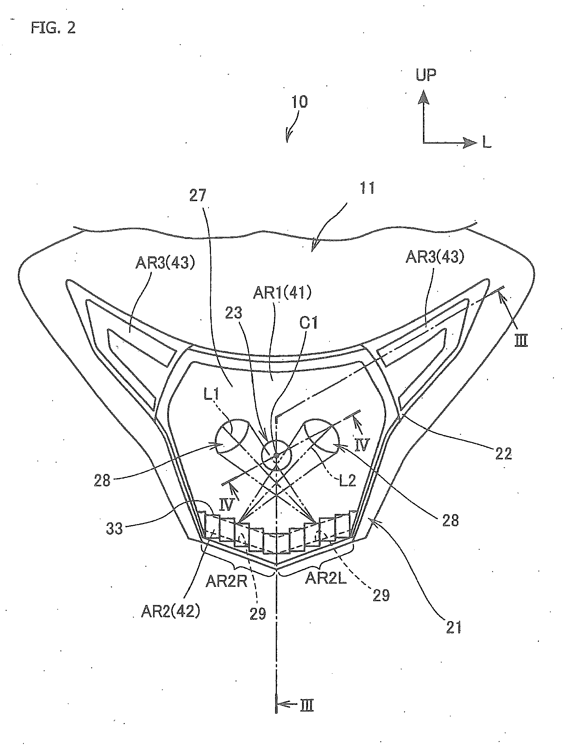

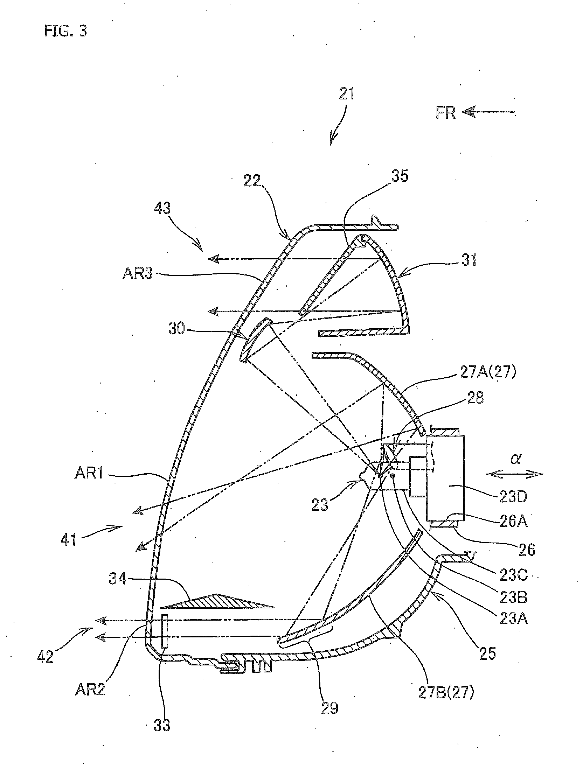

FIG. 2 is a view of the headlamp 21 after removal of a part (the region corresponding to the central area AR1) of the front lens 22, as viewed from the front side together with the surrounding configuration. Besides, FIG. 3 is a sectional view taken along line III-III of FIG. 2. Incidentally, in FIGS. 2 and 3 and other figures set forth below, two-dotted chain lines indicate beams of light from the bulb 23.

As shown in FIGS. 1 to 3, the front lens 22 is formed from a light-transmitting resin material or glass material. The front lens 22 is formed in the shape of an inverted triangle such that its width is greater on the upper side and smaller on the lower side in front view; simultaneously, the front lens 22 is formed in a forwardly convexed non-spherical shape (dome shape) in side view. This front lens 22 is fixed to the front end of the lamp housing 25, to cover the front side of the lamp housing 25.

The lamp housing 25 is formed from a non-light-transmitting resin material, in a rearwardly recessed box-like shape as shown in FIG. 3. At a rear portion of the lamp housing 25, a tubular bulb-holding part 26 for holding the bulb 23 is formed. A bulb insertion hole 26A possessed by the bulb-holding part 26 is opening to the rear side, and the bulb 23 inserted from the rear side is supported thereby.

The bulb 23 is of a double filament type such that a low-beam filament (low-beam light source part) 23A and a high-beam filament (high-beam light source part) 23B are provided inside a glass-made bulb body 23C. At a rear portion of the bulb body 23C, a socket 23D larger than the bulb body 23C in diameter is integrally provided. The socket 23D is held by the bulb-holding part 26, and both the filaments 23A and 23B are located forwardly of the bulb-holding part 26.

The low-beam filament 23A is disposed forwardly of the high-beam filament 23B, and a light-blocking plate (not shown) is disposed therebelow. The light-blocking plate blocks downward beams of light emitted from the low-beam filament 23A. As a result, the light from the low-beam filament 23A is emitted toward the areas exclusive of the lower side; in other words, the light is emitted from the bulb 23 toward the upper side (inclusive of the front upper side and the rear upper side) as well as the front, rear, left, and right sides, and so on.

On the other hand, the light from the high-beam filament 23B is not blocked by the light-blocking plate, so that the light is emitted from the bulb 23 toward a wide range of sides inclusive of the upper, lower, front, rear, left, and right sides.

Incidentally, the bulb 23 is not restricted to the above-mentioned bulb. Other double filament type bulbs having a low-beam filament 23A and a high-beam filament 23B are also applicable. In addition, in FIGS. 2 and 3 and other figures set forth below, the positions of the filaments 23A and 23B are illustrated schematically; in practice, the heights or the like of the filaments 23A and 23B may be different.

As shown in FIG. 3, the lamp housing 25 is provided, on the rear side of the bulb 23, with: a main reflector 27 for reflecting the light from the bulb 23 toward the central area AR1 of the front lens 22; and first sub reflectors 28 for reflecting a portion of the light of the bulb 23 in directions different from the direction of the light reflected from the main reflector 27 (in this embodiment, in forwardly downward oblique directions in side view (FIG. 3) and in laterally downward oblique directions in front view (FIG. 2))

In addition, the lamp housing 25 is provided, below the bulb 23, with a second sub reflector 29 for reflecting the light from the first sub reflectors 28 toward the lower-side area AR2 on the front side.

Further, the lamp housing 25 is provided, frontwardly upward the bulb 23, with third sub reflectors 30 for reflecting a portion of the light of the bulb 23 in rearward directions different from the directions of the beams of light reflected by the main reflector 27 and the sub reflectors 28 and 29. Furthermore, the lamp housing 25 is provided, on the upper left and right sides of the bulb 23 and the main reflector 27, with fourth sub reflectors 31 for reflecting the light from the third sub reflectors 30 toward the side areas AR3 on the front side.

The main reflector 27 is a large-sized reflector covering the upper, lower, left and right sides of the bulb 23 on the rear side of the bulb 23. The main reflector 27 is formed in a rearwardly recessed concave surface and is mirror finished. The main reflector 27 reflects the light emitted upward from the low-beam filament 23A, by its portion above the bulb 23 (the low-beam filament 23A), in a forward direction so as to radiate a lower beam, namely, a downward headlight beam. In other words, the upper half of the main reflector 27 functions as a low-beam reflector part 27A.

In addition, the main reflector 27 reflects the beams of light emitted from the high-beam filament 23B toward the upper, lower, left, and right sides, and so on, by substantially the whole body thereof, into a forward direction so as to radiate a high beam, namely, an upward headlight beam. In other words, the lower half of the main reflector 27 functions as a high-beam reflector part 27B.

Consequently, the bulb 23 and the main reflector 27 forms the main light emission part 41 for emitting the light of the bulb 23 through the central area AR1 of the front lens 22. Incidentally, while the main reflector 27 in this embodiment is formed as a component part separate from the lamp housing 25, the main reflector 27 may be formed integrally with the lamp housing 25.

As shown in FIGS. 2 and 3, the first sub reflectors 28 are distributedly disposed at positions with leftward and rightward offsets from the center C1 (see FIG. 2) of the bulb 23 in front view. In addition, the first sub reflectors 28 are disposed in areas to which the light from the low-beam filament 23A is incident, in other words, in areas above and rearward of the bulb 23.

The left and right first sub reflectors 28 are formed as concave surfaces and as mirror surfaces, for reflecting the light toward the lower side, the light being emitted from the low-beam filament 23A in leftwardly upward and rightwardly upward directions.

In FIG. 2, symbols L1 and L2 denote the optical axes of the left and right sub reflectors 28, respectively. As seen from the optical axes L1 and L2 shown in FIG. 2, in front view, the first sub reflector 28 on the right side reflects the light emitted in a rightwardly upward oblique direction from the low-beam filament 23A toward a left lower side. On the other hand, the first sub reflector 28 on the left side reflects the light emitted in a leftwardly upward oblique direction from the low-beam filament 23A toward a right lower side.

As shown in FIG. 3, in side view, the left and right first sub reflectors 28 reflect the light emitted rearwardly upward from the low-beam filament 23A toward the lower side, more specifically, toward front lower sides at a more downward angle as compared with the light reflected by the main reflector 27.

As shown in FIG. 3, the beams of light from the left and right first sub reflectors 28 are reflected toward the front side by the second sub reflector 29. The second sub reflector 29 is formed integrally with the lower front end of the main reflector 27, and its reflection surface is formed as a mirror surface. More specifically, in front view, as shown in FIG. 2, the second sub reflector 29 is composed of a pair of left and right slant surfaces inclined obliquely upward from the vehicle-width-directional center of the headlamp 21 toward vehicle-width-directionally outer sides. Besides, in side view, as shown in FIG. 3, the second sub reflector 29 is formed as a slant surface extending forwardly downward from the lower front end of the main reflector 27.

In the second sub reflector 29 thus composed of the pair of left and right slant surfaces, as shown in FIG. 2, the light from the first sub reflector 28 on the right side is incident on a left-side surface of the second sub reflector 29, to be reflected toward a left half area AR2L of the lower-side area AR2. In addition, the light from the first sub reflector 28 on the left side is incident on a right-side surface of the second sub reflector 29, to be reflected toward a right half area AR2R of the lower-side area AR2.

In this case, the light is emitted forward from the pair of left and right slant surfaces constituting the second sub reflector 29, so that light in a V-shaped profile in front view can be emitted forward. This ensures that a downwardly projected corner part (corresponding to the lower-side area AR2) corresponding to a lower portion of the front lens 22 can be made to be luminous in a downwardly projected shape (in other words, in V-shape) in front view.

In other words, the first sub reflectors 28 and the second sub reflector 29 constitute a lower-side sub light emission part (first sub light emission part) 42 by which a portion of the light of the low-beam filament 23A is emitted through the lower-side area AR2 of the front lens 22.

Thus, a characteristic light emission part is provided adjacently to the lower edge of the main light emission part 41. This makes it possible to enhance external visibility, and to enhance the front-side design of the motorcycle 10.

Moreover, since the bulb 23 used for the main light emission part 41 is employed, it is unnecessary to provide, for example, a bulb for exclusive-use for the lower-side sub light emission part 42, and, therefore, an increase in the number of component parts can be avoided. In addition, since the lower-side sub light emission part 42 is provided by utilizing the space of the main light emission part 41, the headlamp 21 can be restrained from being enlarged in size. Owing to these points, a reduction in cost can be promised while adopting a configuration in which a characteristic light emission part is provided.

As shown in FIGS. 2 and 3, an inner lens 33 is disposed on the inner side of a lower portion of the front lens 22. The light from the second sub reflector 29 is radiated forward by passing through the inner lens 33.

In the structure in which the inner lens 33 is thus provided, the externally seen design of the lower-side area AR2 can be made more characteristic, by setting the inner lens 33 to be a colorless or colored transparent member or by setting the inner lens 33 in a bent shape (as shown in FIG. 2) or the like. In addition, the degree of freedom in design can also be enhanced.

Furthermore, as shown in FIG. 3, an extension 34 extending rearward toward the main reflector 27 is disposed on the upper side of the inner lens 33. Therefore, an inside bottom surface of the lamp housing 25 and the inner lens and the like can be prevented from being externally seen through the front lens 22.

Incidentally, while the case where the light condensed toward the second sub reflector 29 is emitted by the first sub reflectors 28 has been illustrated in the present configuration, this is not restrictive. For instance, the first sub reflectors 28 may be formed in such a reflecting shape as to emit parallel light flux toward the second sub reflector 29, or in such a reflecting shape as to emit divergent light flux toward the second sub reflector 29. In short, it suffices for the left and right first sub reflectors 28 to be so formed as to reflect the light from the bulb 23 toward the second sub reflector 29.

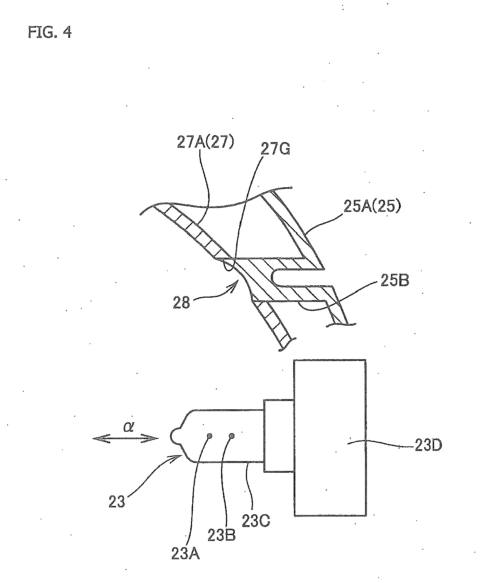

FIG. 4 is a side sectional view showing the first sub reflector 28 together with the surrounding configuration, and corresponds to a sectional view taken along line IV-IV of FIG. 2.

The first sub reflector 28 is formed in such a shape as to extend in the front-rear direction α of the motorcycle 10 and to have a concave surface as a front end face thereof. This shape ensures that the first sub reflector 28 can be molded to be demolded in the front-rear direction α.

Here, the front-rear direction α is a direction which is along the optical axis direction of the main light emission part 41 of the headlamp 21, and which is coincident with the front-rear direction of the whole unit of the headlamp 21.

As shown in FIG. 4, a rear wall 25A of the lamp housing 25 is integrally provided with a projection 25B which projects forward along the front-rear direction α. The front end face of the projection 25B is formed as a concave surface and as a mirror surface. As a result, the first sub reflector 28 is formed.

In addition, as shown in FIG. 3, of the lamp housing 25, the portions other than the first sub reflectors 28 are also formed in such shapes that they can be molded to be demolded along the front-rear direction α. These points ensure that in this embodiment, the first sub reflectors 28 and the lamp housing 25 are formed as an integral molded product which is molded to be demolded in the front-rear direction α.

As shown in FIG. 4, the rear wall 25A of the lamp housing 25 is disposed rearwardly of and proximately to the main reflector 27. Besides, the main reflector 27 is formed with the projection 25B projecting forward from the rear wall 25A of the lamp housing 25; in other words, the main reflector 27 is formed with openings 27G through which the first sub reflectors 28 are exposed to the front side.

This ensures that the first sub reflectors 28 can be exposed to the side of the bulb 23 located on the front side of the lamp housing 25, without being hidden by the lamp housing 25. Consequently, the light from the bulb 23 (low-beam filament 23A) can be efficiently incident on the first sub reflectors 28.

In addition, as shown in FIG. 4, the first sub reflectors 28 are not projecting forward from the main reflector 27 but are formed as surfaces smoothly continuous with the surface of the main reflector 27. Therefore, no step is formed between the first sub reflectors 28 and the main reflector 27, so that generation of a shadow due to the presence of such step can be avoided.

Therefore, despite the configuration wherein the first sub reflectors 28 are disposed within the area of the main reflector 27 in front view, generation of shadows due to the presence of the first sub reflectors 28 can be inhibited. Consequently, it is possible to ensure that the first sub reflectors 28 are difficult to see externally, regardless of whether the bulb is in the ON state or in the OFF state.

Moreover, according to this configuration, the first sub reflectors 28 are formed in shapes along the front-rear direction α, which in turn is along the optical axis direction of the main light emission part 41. Therefore, the first sub reflectors 28 can be easily molded integrally with a conventional main reflector 27, which is molded to be demolded in the front-rear direction.

Further, in this configuration, the second sub reflector 29 for reflecting forward the light from the first sub reflectors 28 is also formed integrally with the main reflector 27. Specifically, as shown in FIG. 3, the second sub reflector 29 is formed as a surface extending forwardly downward from the lower front end of the main reflector 27 in side view. Therefore, the second sub reflector 29 also does not hinder the main reflector 27 from being molded to be demolded in the front-rear direction α.

Accordingly, the main reflector 27 integrally provided with the first and second sub reflectors 28 and 29 can be easily molded in a desiredly demoldable manner, without using a slide mold or the like.

Now, the third sub reflectors 30 and the fourth sub reflectors 31 will be described below.

As shown in FIG. 3, the third sub reflectors 30 are reflection plates by which portions of the light from the bulb 23 are reflected toward the fourth reflectors 31 disposed on the depth side of the left and right side areas AR3. More specifically, the third sub reflectors 30 are distributedly disposed between the central area AR1 and the side areas AR3, at positions with leftward and rightward offsets from the center of the bulb 23 in front view. In addition, the third sub reflectors 30 are formed as concave surfaces and as mirror surfaces, for reflecting the light from the low-beam filament 23A toward the fourth sub reflectors 31.

Incidentally, the third sub reflectors 30 are component parts which are formed separately from the main reflector 27.

The fourth sub reflectors 31 are disposed on the depth side of the left and right side areas AR3, respectively. The fourth sub reflectors 31 are formed as curved surfaces and as mirror surfaces, for reflecting the light from the third sub reflectors 30 toward the side areas AR3 on the front side. Therefore, light is emitted forward through the left and right side areas AR3, so that corner portions located at upper left and right portions of the front lens 22 in front view (corresponding to the left and right side areas AR3) can be made to emit light.

In this manner, the third sub reflectors 30 and the fourth sub reflectors 31 can form side sub light emission parts (second sub light emission parts) 43 by which a portion of the light of the low-beam filament 23A is emitted through the side areas AR3 of the front lens 22.

As a result, in this configuration, a characteristic light emission part can be provided at the lower edge of the main light emission part 41, and, also, characteristic light emission parts can be provided on the left and right sides of and adjacently to the main light emission part 41. Therefore, external visibility can be enhanced more, and the front-side design of the motorcycle 10 can be enhanced more.

Moreover, like the light emission part (lower-side sub light emission part 42) at the lower edge of the main light emission part 41, the left and right characteristic light emission parts are also provided by utilizing the space of the main light emission part 41, without need to provide an exclusive-use bulb or the like. Therefore, an increase in the number of component parts can be avoided, enlargement of the headlamp 21 in size can be obviated, and a reduction in cost can be promised.

Furthermore, as shown in FIG. 3, inner lenses 35 are provided also between the fourth sub reflectors 31 and the front lens 22. As a result, the light from the fourth sub reflectors 31 is radiated forward by passing through the inner lenses 35. By appropriately setting the color and/or shape of the inner lenses 35, the externally viewed design of the left and right side areas AR3 can be made more characteristic, and the degree of freedom in design can also be enhanced.

Incidentally, while the case where the fourth sub reflectors 31 are formed separately from the main reflector 27 has been shown in FIG. 3, this is not restrictive. Thus, the fourth sub reflectors 31 may be formed integrally with the main reflector 27. As shown in FIG. 3, the fourth sub reflectors 31 are so shaped that upon molding they can be demolded in the optical axis direction of the main light emission part 41 (corresponding to the front-rear direction of the vehicle body). Therefore, even in the case of molding the fourth sub reflectors 31 integrally with the main reflector 27, the main reflector 27 can be easily molded in a desiredly demoldable manner, without using a slide mold or the like.

As has been described above, in the present embodiment, the first sub reflectors 28 (see FIGS. 2 and 3, etc.) are provided by which a portion of the light of the bulb 23 (low-beam filament 23A) as a light source is reflected in directions different from the direction of the light reflected by the main reflector 27. The first sub reflectors 28 are each disposed rearwardly of the bulb 23 in an area to which the light emitted rearward from the bulb 23 is incident. In addition, the first sub reflectors 28 are so shaped that they can be molded to be demolded in the front-rear direction α in the state of layout under consideration. Therefore, the first sub reflectors 28 can each be easily provided as a part of that one of the component parts of the headlamp 21 which is molded to be demolded in the front-rear direction α.

In addition, as shown in FIG. 4, the first sub reflectors 28 are provided integrally with the lamp housing 25 located rearwardly of the main reflector 27. In addition, the first sub reflectors 28 are exposed through the openings 27G provided in the main reflector 27. Therefore, an increase in the number of component parts can be restrained, and enlargement of the headlamp 21 in size can be inhibited.

In addition, the bulb 23 is of a double filament type that has the low-beam filament 23A and the high-beam filament 23B. The main reflector 27 is provided, above the low-beam filament 23A, with the low-beam reflector part 27A (see FIG. 3) for reflecting forward the light emitted upward from the low-beam filament 23A.

Besides, as shown in FIG. 3, the first sub reflectors 28 are disposed above the low-beam filament 23A, whereas the second sub reflector 29 is disposed below the low-beam filament 23A, at such a position as to be spaced from the low-beam filament 23A in front view. Therefore, when the low-beam filament 23A is turned on, an area (low-side area AR2) spaced from the low-beam filament 23A can be made to emit light, by the first and the second sub reflectors 28 and 29. Consequently, a characteristic external appearance can be realized, and external visibility can also be enhanced.

Furthermore, as shown in FIG. 2, the first sub reflectors 28 are located with leftward and rightward offsets from the center C1 of the low-beam filament 23A in front view. This permits the first sub reflectors 28 to be arranged while avoiding the low-beam filament 23A. As a result, it becomes easy to secure the quantity of light from the lower-side sub light emission part (first sub light emission part) 41 composed of the first and second sub reflectors 28 and 29.

Incidentally, while a mode in which the first sub reflectors 28 are arranged with leftward and rightward offsets from the center C1 of the low-beam filament 23A in front view has been described, this is not restrictive. For example, the first sub reflectors 28 may be disposed with an offset toward one of the left and right sides. In short, it suffices for the first sub reflectors 28 to be arranged with an offset toward at least one of the left and right sides so that it is possible to secure the quantity of light from the light emission area (in this configuration, the lower-side sub light emission part 41).

Furthermore, as shown in FIG. 2, the first sub reflectors 28 are distributely arranged on the left and right sides with reference to the low-beam filament 23A in such a manner that the optical axes L1 and L2 of the beams of light reflected by the first sub reflectors 28 intersect each other in front view. In addition, the second sub reflector 29 is formed in a downwardly convexed shape along the lower edge of the main light emission part 41, on the extension lines of the optical axes L1 and L2. Therefore, the portion in the convexed shape along the lower edge of the main light emission part 41 can be made to emit a large quantity of light.

### Second Embodiment

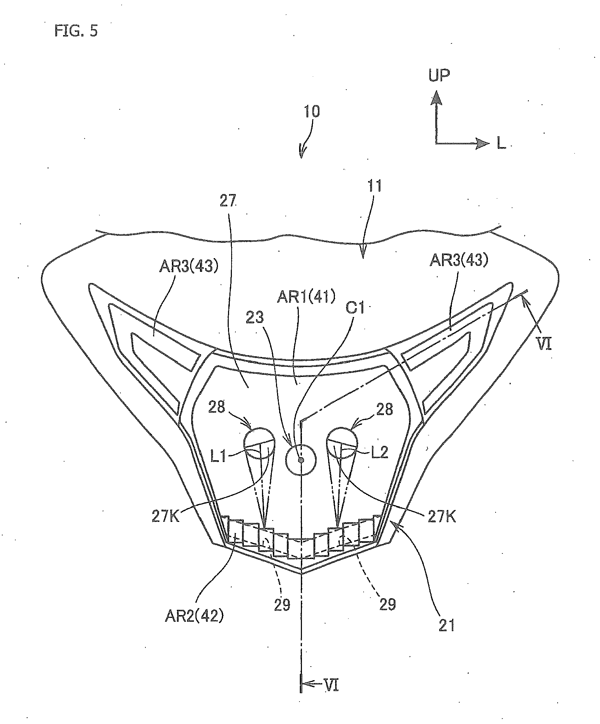

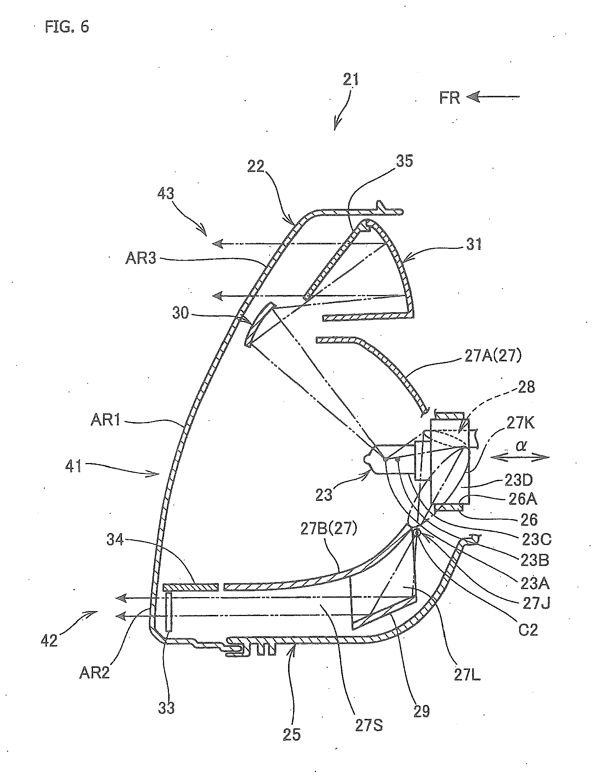

FIG. 5 is a view of a headlamp 21 according to a second embodiment, as viewed from the front side together with the surrounding configuration. In this figure, a central area of a front lens 22 (the region corresponding to a central area AR1) is omitted, like in FIG. 2 above. In addition, FIG. 6 is a sectional view taken along line VI-VI of FIG. 5. Incidentally, in FIGS. 5 and 6 and other figures set forth below, the same or equivalent structures to those in the first embodiment are denoted by the same reference symbols as used above, and different points from the above-mentioned will be described.

As shown in FIGS. 5 and 6, in the second embodiment, left and right first sub reflectors 28 are disposed rearwardly of a bulb 23 in areas to which light emitted rearward from the bulb 23 (low-beam filament 23A) is incident. In addition, the first sub reflectors 28 are so shaped that they can be molded to be demolded in the front-rear direction α, and are so formed as to reflect light toward openings 27K (see FIG. 5) formed on the rear side of a main reflector 27.

Incidentally, in FIG. 6, for easy understanding of the openings 27K, the profile of the opening 27K formed between the first sub reflector 28 and a high-beam reflector part 27B is indicated by dash-and-dot lines.

Like in the first embodiment, the first sub reflectors 28 are provided at a rear wall of a lamp housing 25 located rearwardly of the main reflector 27. The first sub reflectors 28 are each formed as a desiredly demoldable molded product which is molded to be demolded in the front-rear direction α as one body with the lamp housing 25. The other points of configuration of the first sub reflectors 28 than the above-mentioned are the same as in the first embodiment.

In the headlamp 21 in the second embodiment, the main reflector 27 is formed as a movable reflector which can be turned up and down relative to the lamp housing 25, with a turning axis 27J (see FIG. 5) extending in the vehicle width direction as a fulcrum. By moving the movable reflector, an optical axis adjustment can be carried out.

In the headlamp 21 of the movable reflector type, a turning space for the main reflector 27 must be left between the main reflector 27 and the lamp housing 25 in order that the main reflector 27 is movable inside the lamp housing 25. For this purpose, a space 27S is secured on the rear side of the main reflector 27.

In this configuration, by utilizing the space 27S on the rear side of the main reflector 27, a second sub reflector 29 is provided integrally with a high-beam reflector part 27B (which is the lower half of the main reflector 27), with the opening 27K (which opens to the rear side) left therebetween.

More specifically, the second sub reflector 29 is provided through a stay 27L so that the opening 27K opening obliquely to an upper rear side is left between the second sub reflector 29 and the high-beam reflector part 27B. The first sub reflectors 28 each reflect a portion of the light from the low-beam filament 23A toward the second sub reflector 29. Incidentally, while the case where the left and right first sub reflectors 28 reflect the light downward along the vertical direction in front view is exemplified in this embodiment as shown in FIG. 5, the left and right first sub reflectors 28 may be so arranged that their optical axes L1 and L2 intersect each other in front view like in the first embodiment.

Besides, the second sub reflector 29 reflect the light from the first sub reflectors 28 toward a lower-side area AR2 of a front lens 22. This ensures that a convexed portion along the lower edge of a main light emission part 41 can emit a large quantity of light, like in the first embodiment. In this manner, a lower-side sub light emission part (first sub light emission part) 42 can be provided, through effective utilization of the space 27S on the rear side of the main reflector 27.

Incidentally, as shown in FIG. 6, focal points C2 of the first sub reflectors 28 are coincident with the turning axis 27J of the main reflector 27 in side view. This ensures that light is condensed in inlets of the openings 27K, so that the light can be easily radiated toward the rear side of the main reflector 27 without being blocked by the main reflector 27.

In addition, in this configuration, as shown in FIG. 5, the left and right openings 27K are visible in front view. Therefore, of the main reflector 27, those portions which correspond to the openings 27K are not luminous but are darker than the surroundings. Since the main reflector 27 thus has portions which are not luminous (dark portions), a characteristic external appearance can be obtained.

As has been described above, in this embodiment, the first sub reflectors 28 are provided by which a portion of the light from the bulb 23 (low-beam filament 23A) as a light source is reflected in different directions from the direction of light reflected by the main reflector 27. The first sub reflectors 28 are arranged rearwardly of the bulb 23 in areas to which the light emitted rearward from the bulb 23 is incident. In addition, the first sub reflectors 28 are so shaped that they can be molded to be demolded in the front-rear direction α in the state of layout under consideration. Therefore, the same or equivalent effects to those in the first embodiment can be produced; for example, the first sub reflectors 28 can each be easily provided as a part of that one of the component parts of the headlamp 21 which is molded to be demolded in the front-rear direction α.

Furthermore, in this configuration, the openings 27K through which the light reflected by the first sub reflectors 28 is permitted to pass to the rear side of the main reflector 27 are provided on the lower side of the first sub reflectors 28. In addition, the second sub reflector 29 is disposed outside of the main reflector 27 in areas to which the light having passed through the openings 27K is incident. Therefore, the lower-side sub light emission part (first sub light emission part) 42 can be provided, through effective utilization of the space outside of the main reflector 27.

Moreover, since this configuration is applied to the headlamp 21 of the movable reflector type, the lower-side sub light emission part 42 can be provided through effective utilization of the vacant space outside of the main reflector 27, in order that the main reflector 27 is movable inside the lamp housing 25. Consequently, enlargement of the headlamp 21 in size can be restrained.

Besides, the openings 27K each have at least a part thereof opening below the bulb 23 serving as a light source. Therefore, the openings 27K can be provided through utilization of areas which are not utilized for emission of the low beam, so that a light emission area for the low beam is not obstructed by the arrangement of the openings 27K. Consequently, the light emission area can be secured easily.

In addition, since the left and right openings 27K are provided in such positions as to be visible in front view, it is possible to provide the main reflector 27 with portions which are not luminous (dark portions). Consequently, a more characteristic external appearance can be obtained.

### Third Embodiment

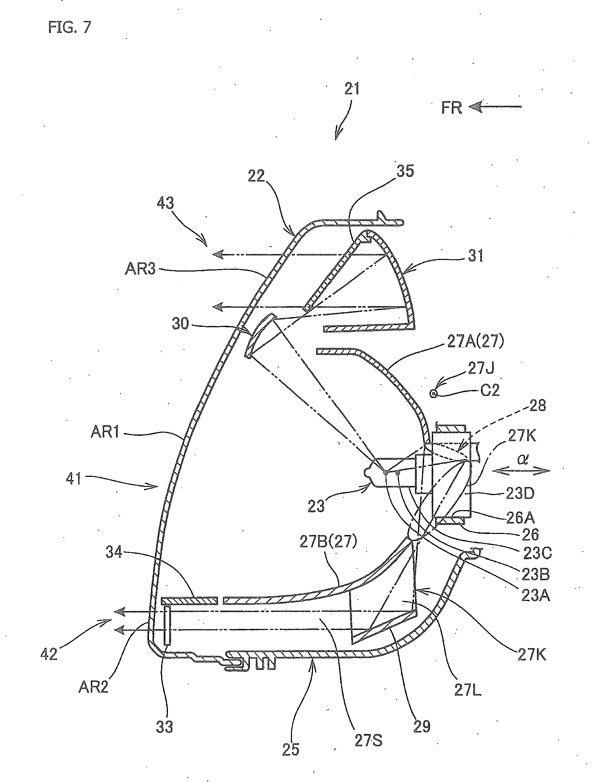

FIG. 7 is a view of a headlamp 21 according to a third embodiment, as viewed from a lateral side together with the surrounding configuration. In the third embodiment, a case is shown in which first sub reflectors 28 are formed integrally with a main reflector 27 of a movable reflector type. In this configuration, the first sub reflectors 28 and a second sub reflector 29 are provided integrally with the main reflector 27, and the main reflector 27 is configured as a movable reflector which can be moved so that an optical axis adjustment can be performed.

A turning axis 27J for the main reflector 27 is set in such a position that, as the position of the main reflector 27 is changed, the positions of both the first and second sub reflectors 28 and 29 are also moved into proper positions. In this configuration, the turning axis 27J is provided in a position as shown in FIG. 7 (a position above the first sub reflectors 28 and rearwardly of the main reflector 27). This ensures that when the main reflector 27 is moved to perform an adjustment of the optical axis of a main light emission part 41, the optical axis of a lower-side sub light emission part 42 composed of the first sub reflectors 28 and the second sub reflector 29 is also adjusted to a proper position.

In addition, as shown in FIG. 7, the first and second sub reflectors 28 and 29 and the main reflector 27 are so shaped that they can be molded to be demolded in the front-rear direction α, and, therefore, these reflectors can be produced as an integral molded product.

In this embodiment, the first sub reflectors 28 and the second sub reflector 29 are provided to be integral with the main reflector 27, which is a movable reflector, and, therefore, an optical axis adjustment for the lower-side sub light emission part 42 can be performed in conjunction with an optical axis adjustment for the main light emission part 41.

### Fourth Embodiment

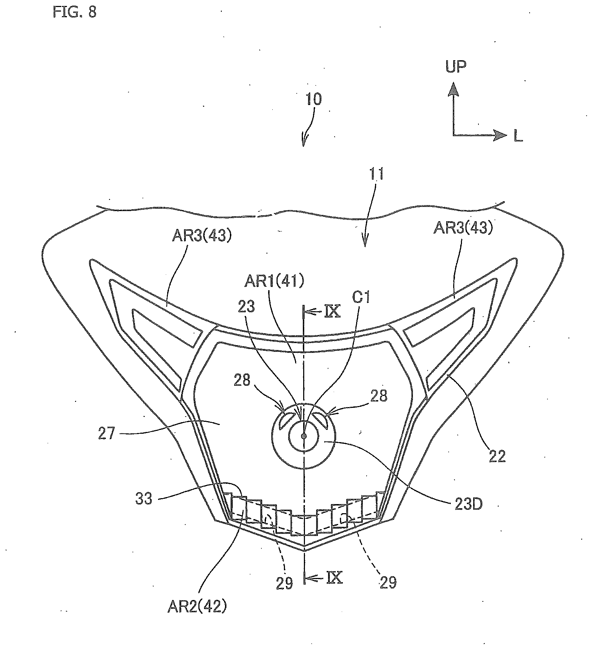

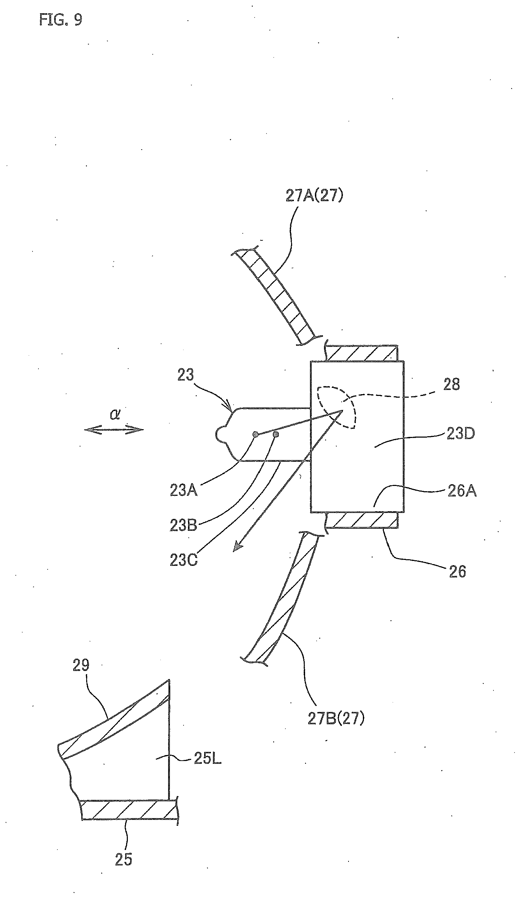

FIGS. 8 and 9 illustrate a fourth embodiment. FIG. 8 is a view of a headlamp 21 according to the fourth embodiment, as viewed from the front side together with the surrounding configuration, showing a state after removal of a central area AR1 of a front lens 22. FIG. 9 is a view of a bulb 23, as viewed from a lateral side together with the surrounding configuration, corresponding to a sectional view taken along line IX-IX of FIG. 8.

The headlamp 21 according to the fourth embodiment is of a fixed reflector type in which a main reflector 27 is fixed to a lamp housing 25. The headlamp 21 is so configured that an optical axis adjustment is carried out by moving the lamp housing 25 as a whole.

In the fourth embodiment, a socket 23D for a bulb 23 has first sub reflectors 28 formed integrally therewith. As shown in FIGS. 8 and 9, the first sub reflectors 28 are disposed at a front surface of the socket 23D, distributedly at positions with leftward and rightward offsets from the center C1 (see FIG. 8) of the bulb 23 in front view. In addition, the first sub reflectors 28 are disposed in areas to which light from a low-beam filament 23A is incident, specifically, above and rearwardly of the bulb 23.

According to this configuration, the first sub reflectors 28 can be provided through utilization of the front surface of the socket 23D. Therefore, an existing space can be effectively utilized, and it is unnecessary to provide the main reflector 27 or the lamp housing 25 with a configuration for providing the first sub reflectors 28.

In addition, the socket 23D can be so shaped that the socket 23D inclusive of the first sub reflectors 28 can be molded to be demolded in the front-rear direction α. Consequently, the socket 23D and the first sub reflectors 28 can be produced as an integral molded product.

Besides, in this configuration, as shown in FIG. 9, a second sub reflector 29 is formed to be integral with the lamp housing 25 through a stay 25L. As shown in FIG. 9, the second sub reflector 29 is so shaped that it can be molded to be demolded in the front-rear direction α. Consequently, the second sub reflector 29 can be formed as a molded product which is integral with the lamp housing 25.

Thus, the first sub reflectors 28 and the second sub reflector 29 are provided to be integral with the socket 23D and the lamp housing 25, which are component parts of the headlamp 21 exclusive of the main reflector 27. Therefore, while adopting a configuration of a type in which an optical axis adjustment is carried out by moving the headlamp 21 as a whole, it is possible to easily provide the first sub reflectors 28 and the second sub reflector 29. Also, it is possible to perform an optical axis adjustment for a lower-side sub light emission part 42 in conjunction with an optical axis adjustment for a main light emission part 41.

In this case, since the component part to which to attach the first sub reflectors 28 and the second sub reflector 29 is not restricted, the degree of freedom in configuration is enhanced that much, as compared with the first to third embodiments.

Incidentally, while a configuration wherein the first sub reflectors 28 are provided as parts of the lamp housing 25 or the main reflector 27 whereas the second sub reflector 29 is provided as a part of the main reflector 27 has been described in the first to third embodiment, and a configuration wherein the first sub reflectors 28 are provided as parts of the socket 23D whereas the second sub reflector 29 is provided as a part of the lamp housing 25 has been described in the fourth embodiment, these configurations are not restrictive. For instance, both the first sub reflectors 28 and the second sub reflector 29 may be provided as s part of the lamp housing 25, or may be provided as parts of the main reflector 27. In short, the sub reflectors 28 and 29 are appropriately provided as parts of a molded product which is demolded in the optical axis direction α of the main light emission part 41, whereby these can be produced as an integral molded product.

The above-described embodiments are merely presented as exemplary modes for carrying out the present invention, and arbitrary modifications and applications are possible without departure from the gist of the invention.

For instance, while the cases where the present invention is applied to the headlamp 21 of the motorcycle 10 have been described in the above embodiments, these are not restrictive. Thus, the present invention may be applied to known lighting apparatuses for use in saddle type vehicles, four-wheel vehicles, etc. Incidentally, the saddle type vehicles generally include those vehicles in which the driver is seated astride a vehicle body, and thus include not only motorcycles (inclusive of motorbikes) but also those three-wheel vehicles and four-wheel vehicles which are classified as ATVs (all terrain vehicles).

It is the object of the invention to provide a lighting apparatus such that a sub reflector, by which a portion of light of a light source for a main light emission part is reflected in a direction different from the direction of light emitted from the main light emission part, can be easily provided as a part of a component part molded to be demolded in the optical axis direction of the main light emission part.

The lighting apparatus includes first sub reflectors 28 by which a portion of light of a bulb 23 is reflected in a direction different from the direction of light reflected from a main reflector 27. The first sub reflectors 28 are disposed in areas which are on the rear side of the bulb 23 and to which the light emitted rearward from the bulb 23 is incident. In addition, the first sub reflectors 28 are each formed in such a shape that the first sub reflectors 28 can be molded to be demolded in the optical axis direction of the main light emission part 41 (the front-rear direction α) in the state of layout under consideration.

## Claims

1. A lighting apparatus comprising:
a main light emission part (41) including a light source (23), and a main reflector (27) disposed rearwardly of the light source (23), the main reflector (27) reflecting light of the light source (23) forward; and
a sub light emission part (42) including a first sub reflector (28) for reflecting a portion of the light from the light source (23) in a direction different from the direction of the light emitted from the main light emission part (41), and a second sub reflector (29) for reflecting the light from the first sub reflector (28) toward a front side,
wherein the first sub reflector (28) is disposed rearwardly of the light source (23) in an area to which the light emitted rearward from the light source (23) is incident,
**characterized in that**
the first sub reflector (28) is formed as a part of a molded product which is one of component parts of the lighting apparatus, the molded product demolded in the direction of an optical axis of the main light emission part (41) in the state of layout under consideration, and
the light source (23) is of a double filament type having a low-beam filament (23A) and a high-beam filament (23B), and the main reflector (27) has a low-beam reflector part (27A) above the low-beam filament (23A), the low-beam reflector part (27A) reflecting light emitted upward from the low-beam filament (23A) toward a front side, wherein
the first sub reflector (28) is disposed above the low-beam filament (23A), and the second sub reflector (29) is disposed below the low-beam filament (23A) at a position spaced from the low-beam filament (23A) in front view.

2. The lighting apparatus according to claim 1,
wherein the first sub reflector (28) is located with an offset at least in one of leftward and rightward directions from the center of the low-beam filament (23A) in front view.

3. The lighting apparatus according to any one of claims 1 or 2,
wherein a pair of the first sub reflectors (28) are disposed distributedly on left and right sides with reference to the low-beam filament (23A) so that optical axes (L1, L2) of beams of light reflected by the first sub reflectors (28) intersect each other in front view, and
the second sub reflector (29) is formed in a downwardly convexed shape along an lower edge of the main light emission part (41) in front view, on extension lines of the optical axes (L1, L2).

4. The lighting apparatus according to claim 1,
wherein an opening (27K) for allowing light reflected by the first sub reflector (28) to pass therethrough to the rear side is provided on a lower side of the first sub reflector (28), and
the second sub reflector (29) is disposed in an area to which the light having passed through the opening (27K) is incident and which is outside of the main reflector (27).

5. The lighting apparatus according to claim 4,
wherein the opening (27K) has at least a part thereof opening below the light source (23).

6. The lighting apparatus according to any one of claims 1 to 5,
wherein the first sub reflector (28) and the second sub reflector (29) are provided to be integral with the main reflector (27), and the main reflector (27) is configured as a movable reflector which can be moved so that an optical axis thereof can be adjusted.

7. The lighting apparatus according to any one of claims 1 to 5,
wherein the first sub reflector (28) and the second sub reflector (29) are provided as parts of a component part or parts of the lighting apparatus exclusive of the main reflector (27), and are configured to be of an adjustment type in which optical axes thereof are adjusted by moving the lighting apparatus as a whole.

## Patentansprüche

1. Beleuchtungsvorrichtung, welche aufweist:
ein Hauptlichtabgabeteil (41), das eine Lichtquelle (23) und einen hinter der Lichtquelle (23) angeordneten Hauptreflektor (27) enthält, wobei der Hauptreflektor (27) Licht der Lichtquelle (23) nach vorne reflektiert; und
ein Nebenlichtabgabeteil (42), das einen ersten Nebenreflektor (28) zum Reflektieren eines Anteils des Lichts von der Lichtquelle (23) in einer Richtung, die sich von der Richtung des von dem Hauptlichtabgabeteil (41) abgegebenen Lichts unterscheidet, sowie einen zweiten Nebenreflektor (29) zum Reflektieren des Lichts von dem ersten Nebenreflektor (28) zur Vorderseite enthält,
wobei der erste Nebenreflektor (28) hinter der Lichtquelle (23) in einem Bereich angeordnet ist, zu dem das von der Lichtquelle (23) nach hinten abgegebene Licht fällt,
**dadurch gekennzeichnet, dass** der erste Nebenreflektor (28) als Teil eines geformten Produkts gebildet ist, das eines von Bauteilen der Beleuchtungsvorrichtung ist, wobei, in im Betracht gezogenen Layout-Zustand, das geformte Produkt in Richtung einer optischen Achse des Hauptlichtabgabeteils (41) entformt wird, und
die Lichtquelle (23) vom Doppelfadentyp mit einem Abblendlichtfaden (23A) und einem Fernlichtfaden (23B) ist, und der Hauptreflektor (27) ein Abblendlichtreflektorteil (27A) über dem Abblendlichtfaden (23A) aufweist, wobei das Abblendlichtreflektorteil (27A) das von dem Abblendlichtfaden (23A) nach oben abgegebene Licht zur Vorderseite reflektiert, wobei
der erste Nebenreflektor (28) über dem Abblendlichtfaden (23A) angeordnet ist, und, in Vorderansicht, der zweite Nebenreflektor (29) unter dem Abblendlichtfaden (23A) an einer Position, mit Abstand von dem Abblendlichtfaden (23A), angeordnet ist.

2. Die Beleuchtungsvorrichtung nach Anspruch 1, wobei der erste Nebenreflektor (28), in Vorderansicht, mit einem Versatz von der Mitte des Abblendlichtfadens (23A) in zumindest eine von rechten und linken Richtungen versetzt angeordnet ist.

3. Die Beleuchtungsvorrichtung nach einem der Ansprüche 1 oder 2, wobei ein Paar der ersten Nebenreflektoren (28) verteilt an linken und rechten Seiten in Bezug auf den Abblendlichtfaden (23A) so angeordnet sind, dass optische Achsen (L1, L2) der von den ersten Nebenreflektoren (28) reflektierten Lichtstrahlen in Vorderansicht einander schneiden, und
der zweite Nebenreflektor (29), in Vorderansicht auf Verlängerungslinien der optischen Achsen (L1, L2), in einer nach unten konvexen Form entlang einem unteren Rand des Hauptlichtabgabeteils (41) ausgebildet ist.

4. Die Beleuchtungsvorrichtung nach Anspruch 1, wobei eine Öffnung (27K), um zu erlauben, dass vom ersten Nebenreflektor (28) reflektiertes Licht zur Rückseite hindurchtritt, an einer unteren Seite des ersten Nebenreflektors (28) vorgesehen ist, und
der zweite Nebenreflektor (29) in einem Bereich angeordnet ist, auf den Licht, das durch die Öffnung (27K) hindurchgetreten ist, fällt, und der sich außerhalb des Hauptreflektors (27) befindet.

5. Die Beleuchtungsvorrichtung nach Anspruch 4, wobei sich zumindest ein Teil der Öffnung (27K) unter der Lichtquelle (23) befindet.

6. Die Beleuchtungsvorrichtung nach einem der Ansprüche 1 bis 5, wobei der erste Nebenreflektor (28) und der zweite Nebenreflektor (29) integriert mit dem Hauptreflektor (27) vorgesehen sind, und der Hauptreflektor (27) als bewegbarer Reflektor konfiguriert ist, der bewegt werden kann, so dass seine optische Achse eingestellt werden kann.

7. Die Beleuchtungsvorrichtung nach einem der Ansprüche 1 bis 5, wobei der erste Nebenreflektor (28) und der zweite Nebenreflektor (29) als Teile eines Bauteils oder von Bauteilen der Beleuchtungsvorrichtung ausschließlich des Hauptreflektors (27) vorgesehen sind, und in einstellbarer Bauart konfiguriert sind, in der ihre optischen Achsen durch Bewegung der Beleuchtungsvorrichtung insgesamt eingestellt werden.

## Revendications

1. Appareil d'éclairage comprenant :
une partie d'émission de lumière principale (41) incluant une source de lumière (23), et un réflecteur principal (27) disposé à l'arrière de la source de lumière (23), le réflecteur principal (27) réfléchissant la lumière de la source de lumière (23) vers l'avant ; et
une partie d'émission de lumière secondaire (42) incluant un premier réflecteur secondaire (28) pour réfléchir une partie de la lumière depuis la source de lumière (23) dans une direction différente de la direction de la lumière émise depuis la partie d'émission de lumière principale (41), et un deuxième réflecteur secondaire (29) pour réfléchir la lumière depuis le premier réflecteur secondaire (28) vers un côté avant,
dans lequel le premier réflecteur secondaire (28) est disposé à l'arrière de la source de lumière (23) dans une zone par rapport à laquelle la lumière émise vers l'arrière depuis la source de lumière (23) est incidente,
**caractérisé en ce que**
le premier réflecteur secondaire (28) est formé en tant que partie d'un produit moulé qui est l'une de parties constituantes de l'appareil d'éclairage, le produit moulé étant démoulé dans la direction d'un axe optique de la partie d'émission de lumière principale (41) dans l'état de disposition considéré, et
la source de lumière (23) est d'un type à double filament ayant un filament de feu de croisement (23A) et un filament de feu de route (23B), et le réflecteur principal (27) présente une partie de réflecteur de feu de croisement (27A) au-dessus du filament de feu de croisement (23A), la partie de réflecteur de feu de croisement (27A) réfléchissant la lumière émise vers le haut depuis le filament de feu de croisement (23A) vers un côté avant, dans lequel
le premier réflecteur secondaire (28) est disposé au-dessus du filament de feu de croisement (23A), et
le deuxième réflecteur secondaire (29) est disposé en dessous du filament de feu de croisement (23A) à une position espacée du filament de feu de croisement (23A) en vue avant.

2. Appareil d'éclairage selon la revendication 1,
dans lequel le premier réflecteur secondaire (28) est situé avec un décalage au moins dans l'une de directions vers la gauche et vers la droite par rapport au centre du filament de feu de croisement (23A) en vue avant.

3. Appareil d'éclairage selon l'une quelconque des revendications 1 ou 2,
dans lequel une paire des premiers réflecteurs secondaires (28) sont disposés de manière distribuée sur des côtés gauche et droit par rapport au filament de feu de croisement (23A) de sorte que des axes optiques (L1, L2) des faisceaux de lumière réfléchis par les premiers réflecteurs secondaires (28) se croisent en vue avant, et
le deuxième réflecteur secondaire (29) est formé en une forme convexe vers le bas le long d'un bord inférieur de la partie d'émission de lumière principale (41) en vue avant, sur des lignes de prolongement des axes optiques (L1, L2).

4. Appareil d'éclairage selon la revendication 1,
dans lequel une ouverture (27K) pour permettre à la lumière réfléchie par le premier réflecteur secondaire (28) de passer à travers celle-ci vers le côté arrière est fournie sur un côté inférieur du premier réflecteur secondaire (28), et
le deuxième réflecteur secondaire (29) est disposé dans une zone par rapport à laquelle la lumière étant passée à travers l'ouverture (27K) est incidente et qui est extérieure au réflecteur principal (27).

5. Appareil d'éclairage selon la revendication 4,
dans lequel l'ouverture (27K) présente au moins une partie de celle-ci s'ouvrant en dessous de la source de lumière (23).

6. Appareil d'éclairage selon l'une quelconque des revendications 1 à 5,
dans lequel le premier réflecteur secondaire (28) et le deuxième réflecteur secondaire (29) sont fournis pour faire partie intégrante du réflecteur principal (27), et le réflecteur principal (27) est configuré en tant que réflecteur mobile qui peut être déplacé de sorte qu'un axe optique de celui-ci puisse être réglé.

7. Appareil d'éclairage selon l'une quelconque des revendications 1 à 5,
dans lequel le premier réflecteur secondaire (28) et le deuxième réflecteur secondaire (29) sont fournis en tant que parties d'une ou plusieurs parties constituantes de l'appareil d'éclairage excluant le réflecteur principal (27), et sont configurés pour être d'un type réglable dans lequel des axes optiques de ceux-ci sont réglés en déplaçant l'appareil d'éclairage tout entier.
